# EUROPEAN PATENT SPECIFICATION

(11) **EP 1 920 951 B1**
(45) Date of publication and mention of the grant of the patent: **22.05.2013**
(21) Application number: 07254339.0
(22) Date of filing: 01.11.2007
(51) Int. Cl.: B60C 11/04, B60C 11/12

(54) **Pneumatic tire with sipes having an enlarged width at the bottom thereof**
Luftreifen mit Lamellen die am Lamellengrund verdickt sind
Pneu avec incisions à fond élargi

(30) Priority: 08.11.2006 JP 2006303056
(43) Date of publication of application: 14.05.2008
(73) Proprietor: Bridgestone Corporation, Tokyo 104-8340 (JP)
(72) Inventor: Shintani, Haruki, Kodaira-shi Tokyo 187-8531 (JP)
(74) Representative: Waldren, Robin Michael

(56) References cited:
- EP-A- 0 540 340

## Description

### BACKGROUND OF THE INVENTION

### 1. Field of the Invention

The present invention relates to a pneumatic tire capable of improving performances on ice and snow without reducing block durability.

### 2. Description of the Related Art

Various developments have been made of a pneumatic tire such as a heavy load pneumatic tire to improve performances on ice and snow, and Japanese Patent Application Laid-open No. H7(1995)-172111 (JP-A-7 172 111) discloses a related conventional technique, corresponding with the preamble of claims 1 and 4.

A plurality of main grooves extending along a circumferential direction of the pneumatic tire is provided on a tread of the pneumatic tire. A plurality of ribs (a center rib, a pair of second ribs, and a pair of shoulder ribs) are separated in a lateral direction of the tire by the main grooves and tread edges and extends in a lateral direction of the tire. Further, a plurality of lug grooves, each of which extends along the lateral direction of tire, is arranged on some of the ribs (the center rib and the paired second ribs) at circumferential intervals. Some of the ribs are divided in the circumferential direction into blocks by the main grooves and the lug grooves.

Two lateral sipes extending along the lateral direction are formed in each of the blocks. An inflating portion having a cross-sectional teardrop shape is formed on a bottom of each of the lateral sipes to suppress crack generation.

### SUMMARY OF THE INVENTION

For the pneumatic tire described above, it is necessary to increase the number of lateral sipes formed in each block and to sufficiently improve a gripping force in the circumferential direction of the tire (a so-called "edge effect") so as to improve performances on ice and snow (such as traction performances on ice and snow).

However, if the number of lateral sipes increases, then block rigidity is reduced and a block deformation increases at rapid traction changes (rapid traction increase or decrease). Due to this, cracks tend to be generated at the bottoms of the lateral sipes closest to both circumferential outer edges. As a result, block durability is deteriorated due to damage on the blocks.

It is, therefore, an object of the present invention to provide a pneumatic tire capable of improving performances on ice and snow without reducing block durability.

A first aspect of the present invention provides a pneumatic tire which comprises a plurality of main grooves extending on a tread along a circumferential direction of the pneumatic tire; a plurality of ribs separated in a lateral direction of the pneumatic tire by the plurality of main grooves and tread edges and extending along the circumferential direction; a plurality of lug grooves provided on at least one of the ribs at circumferential intervals and extending along the lateral direction; a plurality of blocks formed by dividing the at least one of the ribs in the circumferential direction by the plurality of main grooves and the plurality of lug grooves; at least three lateral sipes extending along the lateral direction in each of the blocks and dividing each of the blocks in the circumferential direction; and an inflating portion formed on a bottom of each of the lateral sipes. The at least three lateral sipes in each of the blocks include a pair of first lateral sipes closest to both circumferential edges of each of the blocks, respectively, and at least one second lateral sipe located between the pair of first lateral sipes. A cross-sectional curvature radius of the inflating portion of each of the first lateral sipes is larger than a cross-sectional curvature radius of the inflating portion of the second lateral sipe, respectively.

According to the first aspect of the present invention, at least three lateral sipes extending along lateral direction are formed in each of the blocks to divide each of the blocks circumferentially. Due to this, it is possible to increase the number of edges in the lateral direction and to sufficiently improve the gripping force (the edge effect).

Further, the cross-sectional curvature radius of the inflating portion of each of the first lateral sipes is larger than that of the inflating portion of the second lateral sipe. Due to this, even if the block deformation increases at rapid traction changes along with an increase in the number of lateral sipes, it is possible to reduce stress concentration on the bottoms of the first lateral sipes closest to the both circumferential edges of each of the blocks, respectively.

It is preferable that a ratio of the curvature radius of the inflating portion of each of the first lateral sipes to the curvature radius of the inflating portion of the second lateral sipe is set to 0.7 to 0.9.

It is further preferable that short sipes extending along the lateral direction are formed on both lateral side edges of each of the blocks, respectively.

A second aspect of the present invention provides a pneumatic tire which comprises a plurality of main grooves extending on a tread along a circumferential direction of the pneumatic tire; a plurality of ribs separated in a lateral direction of the pneumatic tire by the plurality of main grooves and tread edges and extending along the circumferential direction; a plurality of first lug grooves provided on one side of at least one of the ribs at circumferential intervals and extending along the lateral direction; a plurality of second lug grooves provided on another side of the at least one of the ribs at circumferential intervals and extending along the lateral direction; a plurality of connecting sipes, each of which connects a respective pair of a first lug groove and a second lug groove adjacent to the first lug grooves and extends along the circumferential direction; a plurality of blocks formed by dividing the at least one of the ribs in the circumferential direction by the plurality of main grooves, the plurality of first lug grooves and the plurality of second lug grooves; a plurality of circumferential sipes, each of which is formed at a lateral center of each of the blocks, extends along the circumferential direction and divides each of the blocks into a pair of sub-blocks in the lateral direction; at least three lateral sipes extending along the lateral direction in each of the sub-blocks and dividing each of the sub-blocks in the circumferential direction; and an inflating portion formed on a bottom of each of the lateral sipes. One end of each of the first lug grooves is open toward each of the main grooves and another end of each of the first lug grooves is terminated almost at a lateral center of the at least one of the ribs. One end of each of the second lug grooves is open toward each of the main grooves and another end of each of the second lug grooves is terminated almost at a lateral center of the at least one of the ribs. The at least three lateral sipes in each of the sub-blocks include a pair of first lateral sipes closest to both circumferential edges of each of the sub-blocks, respectively, and at least one second lateral sipe located between the pair of first lateral sipes. A cross-sectional curvature radius of the inflating portion of each of the first lateral sipes is larger than a cross-sectional curvature radius of the inflating portion of the second lateral sipe, respectively.

According to the second aspect of the present invention, at least three lateral sipes extending along the lateral direction are formed in each of the sub-blocks to divide each of the sub-blocks circumferentially. Due to this, it is possible to increase the number of edges in the lateral direction and to sufficiently improve the gripping force (the edge effect).

Further, the cross-sectional curvature radius of the inflating portion of each of the first lateral sipes is larger than that of the inflating portion of the second lateral sipe. Due to this, even if the block deformation increases at rapid traction changes along with an increase in the number of lateral sipes, it is possible to reduce stress concentration on the bottoms of the first lateral sipes closest to the both circumferential edges of each of the sub-blocks, respectively.

It is preferable that the two second lateral sipes are provided in each of the sub-blocks, the inflating portions of the pair of first lateral sipes inflate toward the both circumferential edges of each of the sub-blocks, respectively, and the inflating portions of the two second lateral sipes inflate toward each other, respectively.

It is further preferable that a ratio of the curvature radius of the inflating portion of each of the first lateral sipes to the curvature radius of the inflating portion of the second lateral sipe is set to 0.7 to 0.9.

It is further preferable that short sipes extending along the lateral direction are formed on both lateral side edges of each of the blocks, respectively.

### BRIEF DESCRIPTION OF THE DRAWINGS

Fig. 1 is a partially-plane exploded view of a tread of a pneumatic tire according to an embodiment of the present invention;
Fig. 2A is an enlarged view of a block according to the embodiment;
Fig. 2B is a cross-sectional view taken along a line IIB-IIB of Fig. 2A;
Fig. 3 is a partially-plane exploded view of a tread of a pneumatic tire according to a first comparative sample;
Fig. 4A is an enlarged view of a block according to the first comparative sample; and
Fig. 4B is a cross-sectional view taken along a line IVB-IVB of Fig. 4A.

### DETAILED DESCRIPTION OF THE EMBODIMENT

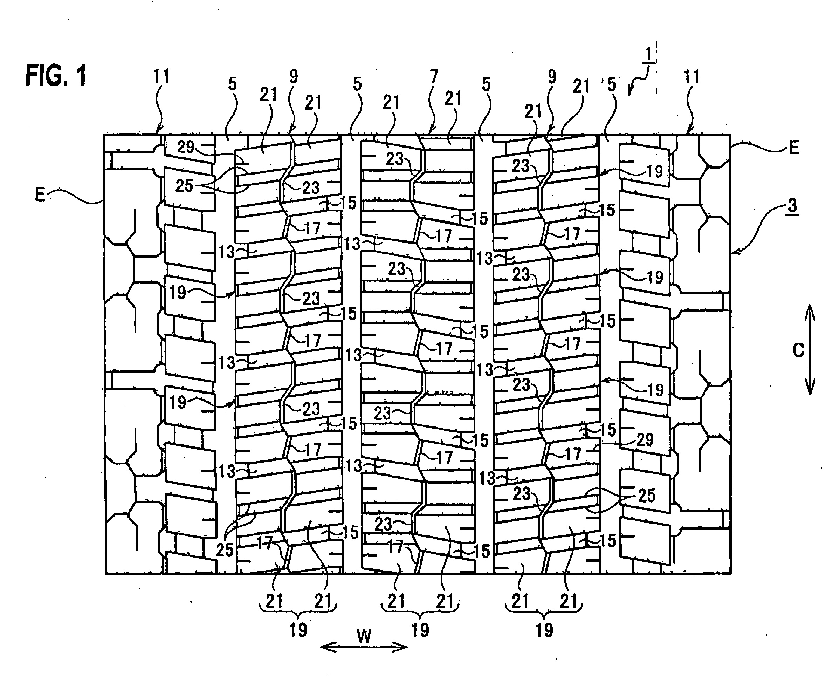

An embodiment of a pneumatic tire according to the present invention is described below with reference to the accompanying drawings. As shown in Fig. 1, a plurality of main grooves 5, which extends along a circumferential direction C of a pneumatic tire 1, is provided on a tread 3 of a pneumatic tire 1. A plurality of ribs 7, 9, and 11, which extends along the circumferential direction C, is separated in a lateral direction W of the tire 1 by the main grooves 5 and tread edges E. The ribs 7, 9, and 11 include a center rib 7, a pair of second ribs 9 located on both sides of the center rib 7, and a pair of shoulder ribs 11 located outside of the paired second ribs 9.

A plurality of first lug grooves 13, which is extends along the lateral direction W, is provided at intervals on one lateral side of each of the center rib 7 and the second ribs 9 (hereinafter, *"*specific block rows 7 and 9*"*). One end of each of the first lug grooves 13 is open toward each main groove 5, and another end thereof is terminated almost at the center of each of the specific block rows 7 and 9. Further, a plurality of second lug grooves 15, which extends along the lateral direction W, is provided at intervals on another lateral side of each of the specific block rows 7 and 9. One end of each of the second lug grooves 15 is terminated almost at the center of each of the specific block rows 7 and 9, and another end thereof is open toward each main groove 5. Moreover, a plurality of connecting sipes 17, each of which connects one of the first lug grooves 13 to one of the second lug grooves 15 adjacent to the one of the first lug grooves 13, is formed at intervals in the circumferential direction C.

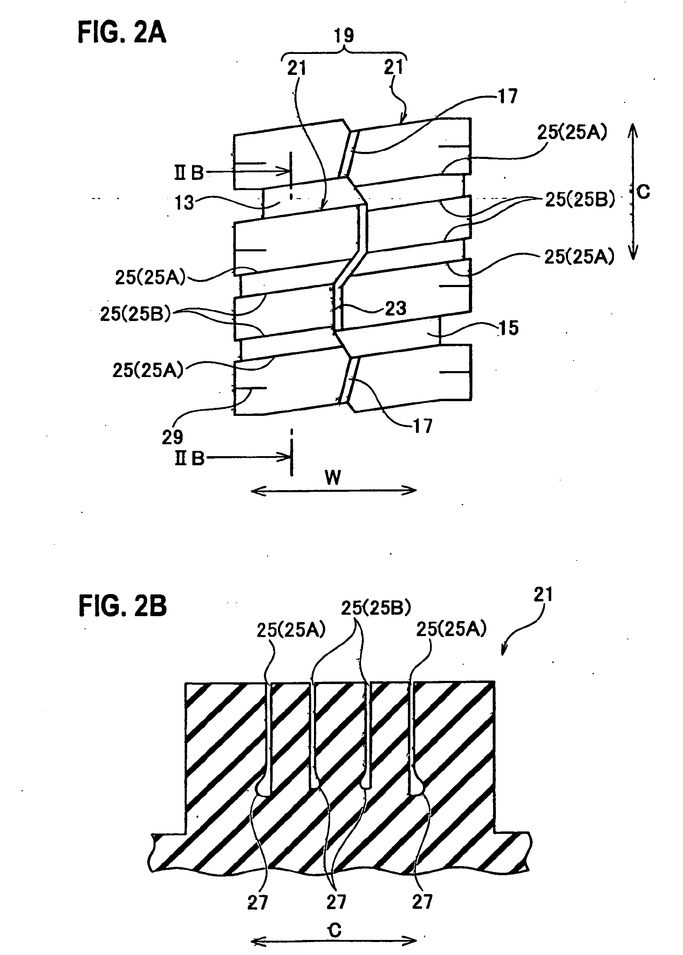

As shown in Figs. 1 and 2A, the specific block rows 7 and 9 are divided into a plurality of blocks 19 in the circumferential direction C by the main grooves 5, the first lug grooves 13, the second lug grooves 15, and the connecting sipes 17. Further, a circumferential sipe 23, which extends along the circumferential direction C, is formed at a lateral center of each block 19. The circumferential sipe 23 divides each block 19 into a pair of sub-blocks 21.

Featured portions of the pneumatic tire 1 according to the present embodiment are described below. As shown in Fig. 2A, four lateral sipes 25, which extend along the lateral direction W, are formed in each of the sub-blocks 21. The four lateral sipes 25 are aligned parallel in the circumferential direction C. As shown in Fig. 2B, an inflating portion 27, which has a generally cross-sectional semicircular shape, is provided on a bottom of each of the lateral sipes 25. In each sub-block 21, the four lateral sipes 25 include two first lateral sipes 25A closest to both circumferential edges of the sub-block 21, respectively, and two second lateral sipes 25B located between the two first lateral sipes 25A. Now that, the circumferential edge is an edged which is positioned at an end of the sub-block 21 (or the block 19) in the circumferential direction C and generates a circumferential gripping force (circumferential edge effect).

A curvature radius of the inflating portion 27 of each of the first lateral sipes 25A is larger than that of the inflating portion 27 of each of the second lateral sipes 25B. Due to this, even if a deformation of each block 19 increases at rapid traction changes, it is possible to reduce stress concentration on the bottoms of the first lateral sipes 25A closest to the circumferential edges of each sub-block.

Furthermore, a ratio of the curvature radius of the inflating portion 27 of each of the first lateral sipes 25 to that of the inflating portion 27 of each of the second lateral sipes 25B (hereinafter, "curvature radius ratio of the inflating portions 27") is set to 0.7 to 0.9. If the curvature radius ratio of the inflating portions 27 is lower than 0.7, the curvature radius of the inflating portion 27 of each first lateral sipe 25A is too large and then rigidity of the sub-block 21 is excessively reduced. On the other hand, if the curvature radius ratio of the inflating portions 27 exceeds 0.9, the curvature radius of the inflating portion 27 of each first lateral sipe 25A is too small and then the stress concentration on the bottom of the first lateral sipe 25A cannot be sufficiently reduced.

Moreover, the inflating portion 27 of each first lateral sipe 25A inflates toward a nearer circumferential edge of each sub-block 21. On the other hand, the inflating portion 27 of each second lateral sipe 25B inflates toward an opposite direction against a inflating direction of the inflating portion 27 of the first lateral sipe 25A adjacent to the second lateral sipe 25B. As a result, it is possible to avoid making a distance between the inflating portion 27 of each first lateral sipe 25A and that of each second lateral sipe 25B excessively small, and then the crack generation on the bottoms of the first lateral sipes 25A or the second lateral sipes 25B is suppressed.

Short sipes 29, each of which extends along the lateral direction W, are formed on both lateral side edges of the blocks 19 (on any one of lateral sides of the sub-blocks 21).

Functions and advantages of the pneumatic tire according to the present embodiment are described below. The four lateral sipes 25, which extend along the lateral direction W, are formed to divide each of the sub-blocks 21 in the circumferential direction C. Due to this, the number of circumferential edges increases, thereby making it possible to sufficiently improve a gripping force (an edge effect).

Further, the curvature radius of the inflating portion 27 of each of the first lateral sipes 25A is larger than that of the inflating portion 27 of each of the second lateral sipes 25B. Due to this, even if the deformation of each block 19 increases at rapid traction changes, it is possible to reduce stress concentration on the bottoms of the first lateral sipes 25A.

As described above, the pneumatic tire 1 according to the present embodiment can suppress crack generation to the bottom of each first lateral sipe 25A and improve performances on ice and snow without reducing block durability.

The present invention is not limited to the present embodiment. For example, the circumferential sipe 23, which divides each block 19 into a pair of sub-block 21, maybe omitted, so that three or more lateral sipes 25, which extend along the lateral direction W, may be formed to divide each block 19 in the circumferential direction C. The present invention can be carried out in various manners.

To describe the advantages of the present invention, the present embodiment will be compared with the following first and second comparative examples.

### (FIRST COMPARATIVE EXAMPLE)

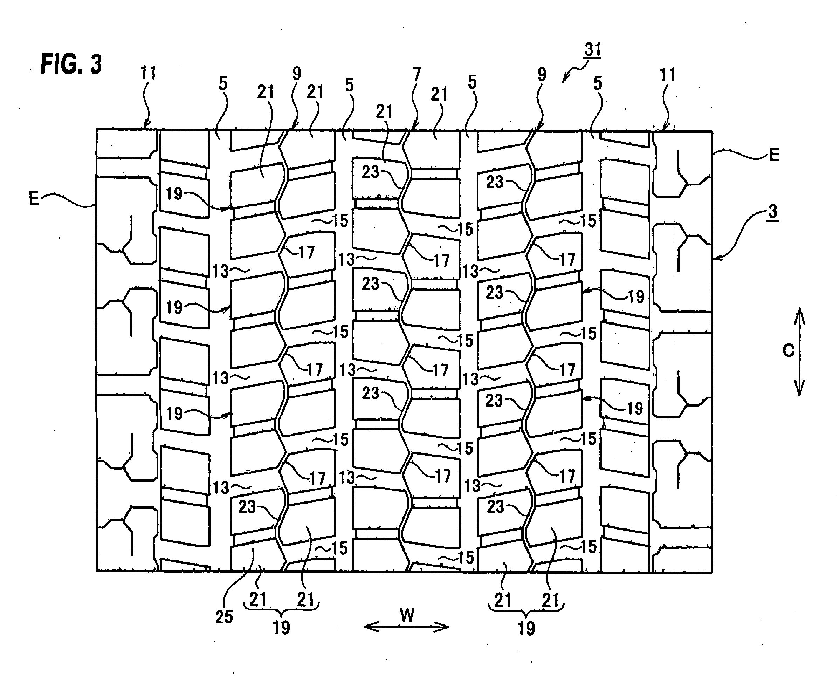

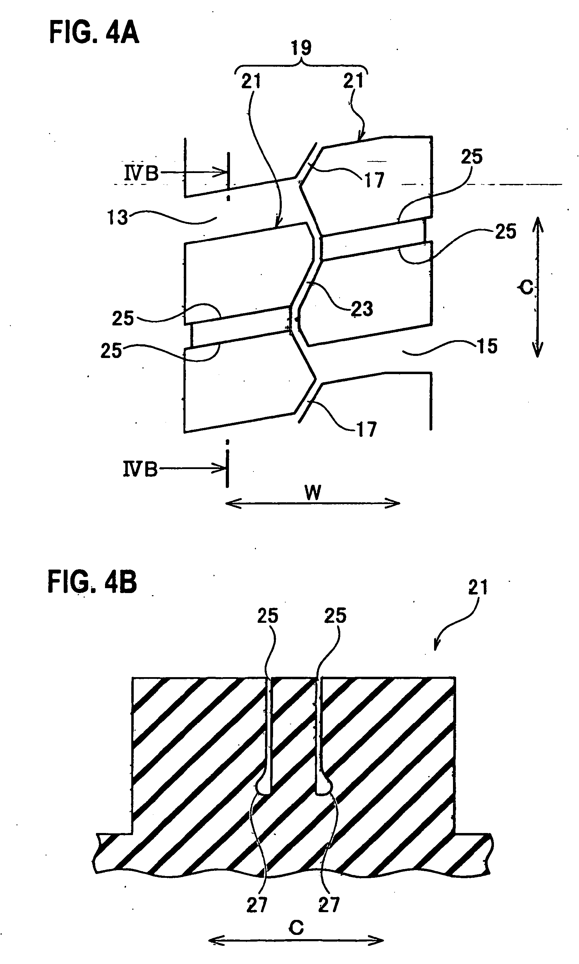

A pneumatic tire according to the first comparative example is described below with reference to Figs. 3, 4A, and 4B. As shown in Figs. 4A and 4B, a pneumatic tire 31 according to the first comparative example differs from the pneumatic tire 1 according to the present embodiment in that only two lateral sipes 25 are formed in each sub-block 21 and their curvature radius ratio is set to 1.0. The pneumatic tire 31 according to the first comparative example is almost similar in configuration to the pneumatic tire 1 according to the present embodiment for the rest. In Figs. 3, 4A, and 4B, corresponding elements of the pneumatic tire 31 to those of the pneumatic tire 1 have same reference numerals, respectively, and detail descriptions thereof will be omitted.

### (SECOND COMPARATIVE EXAMPLE)

Although a pneumatic tire according to the second comparative example is not shown by any drawings, it differs from the pneumatic tire 1 according to the present embodiment only in that the curvature radius ratio is set to 1.0. The pneumatic tire according to the second comparative example is almost similar in configuration to the pneumatic tire 1 for the rest.

### (SPECIFIC COMPARISON)

The pneumatic tire 1 according to the embodiment (in which the curvature radius ratio is set to 0.8), the pneumatic tire 31 according to the first comparative example, and the pneumatic tire according to the second comparative example were prepared as samples for comparison tests (sample of the invention, a first comparison sample, and a second comparison sample. Each of the samples has a predetermined size (11R22.5 16PR W900). Next, each of the samples was assembled into a rim (width: 7.50 inches) and filled with the air of 900 KPa. Each pair of the samples was attached to vehicle (2-D·4 trucks), respectively, and traction tests on ice and snow, and a block durability test were conducted to with the vehicle.

### TRACTION TEST ON ICE

In traction test on ice, each vehicle (engine RPM was kept constant) was started on an ice-covered road condition, and acceleration time from 5 km/h to 30 km/h was measured. Results of the traction test are shown in Table 1 below. In the Table 1, test results of the traction test are shown by indexation (reference indexation: test result of the first comparison sample = 100). A higher numeric value indicates that the pneumatic tire has a better traction performance on ice. As shown in the Table 1, the sample of the invention is superior to the first and second comparison samples in traction performance on ice.

**Table 1**

| (traction on ice) | 1st comparison sample | 2nd comparison sample | sample of invention |
|---|---|---|---|
| test results | 100 | 105 | 108 |

### TRACTION TEST ON SNOW

In traction test on snow, each vehicle (engine RPM was kept constant) was started on a snow-covered road condition, and acceleration time from 5 km/h to 30 km/h was measured. Results of the traction test are shown in Table 2 below. In the Table 2, test results of the traction test are shown by indexation (reference indexation: test result of the first comparison sample = 100). A higher numeric value indicates that the pneumatic tire has a better traction performance on snow. As shown in the Table 2, the sample of the invention is superior to the first and second comparison samples in traction performance on snow.

**Table 2**

| (traction on snow) | 1st comparison sample | 2nd comparison sample | sample of invention |
|---|---|---|---|
| test result | 100 | 103 | 106 |

### BLOCK DURABILITY TEST

In block durability test, the amount of cracks, which had been generated on the bottoms of the lateral sipes 25 after each vehicle traveled 10,000 km, was measured. Results of the traction test are shown in Table 3 below. In the Table 3, test results of the block durability test are shown by indexation (reference indexation: test result of the first comparison sample = 100). A higher numeric value indicates that the pneumatic tire has higher block durability. As shown in the Table 3, the sample of the invention is almost equal to the first comparison sample (and superior to the second comparison sample) in block durability.

**Table 3**

| (block durability) | 1st comparison sample | 2nd comparison sample | sample of invention |
|---|---|---|---|
| test results | 100 | 95 | 100 |

The pneumatic tire according to the present invention can increase the number of circumferential edges and sufficiently improve the gripping force (the edge effect). Furthermore, the pneumatic tire according to the present invention can reduce stress concentration on the bottoms of the first lateral sipes closest to the both circumferential edges of each sub-block, respectively, even if the block deformation increases at rapid traction changes. Due to this, it is possible to improve the tire performances on ice and snow. Moreover, the pneumatic tire according to the present invention can suppress crack generation on the bottoms of the first lateral sipes without reducing block durability.

## Claims

1. A pneumatic tire comprising:
a plurality of main grooves (5) extending on a tread (3) along a circumferential direction (C) of the pneumatic tire;
a plurality of ribs (7, 9, 11) separated in a lateral direction (W) of the pneumatic tire by the plurality of main grooves and tread edges (E) and extending along the circumferential direction (C);
a plurality of lug grooves (13, 15) provided on at least one of the ribs (7, 9) at circumferential intervals and extending along the lateral direction (W);
a plurality of blocks (19) formed by dividing the at least one of the ribs (7, 9) in the circumferential direction (C) by the plurality of main grooves and the plurality of lug grooves;
at least three lateral sipes (25) extending along the lateral direction (W) in each of the blocks and dividing each of the blocks in the circumferential direction (C); and
an inflating portion (27) formed on a bottom of each of the lateral sipes (25),
**characterized in that**
the at least three lateral sipes (25) in each of the blocks (19) include a pair of first lateral sipes (25A) closest to both circumferential edges of each of the blocks (19), respectively, and at least one second lateral sipe (25B) located between the pair of first lateral sipes (25A), and
a cross-sectional curvature radius of the inflating portion of each of the first lateral sipes is larger than a cross-sectional curvature radius of the inflating portion of the second lateral sipe, respectively.

2. The pneumatic tire according to claim 1, wherein
a ratio of the curvature radius of the inflating portion (27) of each of the first lateral sipes (25A) to the curvature radius of the inflating portion (27) of the second lateral sipe (25B) is set to 0.7 to 0.9.

3. The pneumatic tire according to claim 1 or 2, wherein short sipes (29) extending along the lateral direction (W) are formed on both lateral side edges of each of the blocks (19), respectively.

4. A pneumatic tire comprising:
a plurality of main grooves (5) extending on a tread (3) along a circumferential direction (C) of the pneumatic tire;
a plurality of ribs (7, 9, 11) separated in a lateral direction (W) of the pneumatic tire by the plurality of main grooves and tread edges (E) and extending along the circumferential direction (C);
a plurality of first lug grooves (13) provided on one side of at least one of the ribs (7, 9) at circumferential intervals and extending along the lateral direction (W);
a plurality of second lug grooves (15) provided on another side of the at least one of the ribs (7, 9) at circumferential intervals and extending along the lateral direction (W);
a plurality of connecting sipes (17), each of which connects a respective pair of a first lug groove (13) and a second lug groove (15) adjacent to the first lug grooves (13) and extends along the circumferential direction (C);
a plurality of blocks (19) formed by dividing the at least one of the ribs (7, 9) in the circumferential direction (C) by the plurality of main grooves (5), the plurality of first lug grooves (13) and the plurality of second lug grooves (15);
a plurality of circumferential sipes (23), each of which is formed at a lateral center of each of the blocks (19), extends along the circumferential direction (C) and divides each of the blocks (19) into a pair of sub-blocks (21) in the lateral direction (W);
at least three lateral sipes (25) extending along the lateral direction (W) in each of the sub-blocks (21) and dividing each of the sub-blocks in the circumferential direction (C); and
an inflating portion (27) formed on a bottom of each of the lateral sipes (25),
**characterized in that**
one end of each of the first lug grooves (13) is open toward each of the main grooves (5) and another end of each of the first lug grooves (13) is terminated almost at a lateral center of the at least one of the ribs (7, 9),
one end of each of the second lug grooves (15) is open toward each of the main grooves (5) and another end of each of the second lug grooves (15) is terminated almost at a lateral center of the at least one of the ribs (7, 9),
the at least three lateral sipes (25) in each of the sub-blocks (21) include a pair of first lateral sipes (25A) closest to both circumferential edges of each of the sub-blocks (21), respectively, and at least one second lateral sipe (25B) located between the pair of first lateral sipes (25A), and
a cross-sectional curvature radius of the inflating portion of each of the first lateral sipes is larger than a cross-sectional curvature radius of the inflating portion of the second lateral sipe, respectively.

5. The pneumatic tire according to claim 4, wherein
the two second lateral sipes (25B) are provided in each of the sub-blocks (21),
the inflating portions (27) of the pair of first lateral sipes (25A) inflate toward the both circumferential edges of each of the sub-blocks (21), respectively, and
the inflating portions (27) of the two second lateral sipes (25B) inflate toward each other, respectively.

6. The pneumatic tire according to claim 4 or 5, wherein a ratio of the curvature radius of the inflating portion (27) of each of the first lateral sipes (25A) to the curvature radius of the inflating portion (27) of the second lateral sipe (25B) is set to 0.7 to 0.9.

7. The pneumatic tire according to any one of claims 4 to 6, wherein
short sipes (29) extending along the lateral direction (W) are formed on both lateral side edges of each of the blocks (19), respectively.

## Patentansprüche

1. Luftreifen, umfassend:
eine Vielzahl von Hauptkerben (5), die sich auf einer Lauffläche (3) entlang einer Umfangsrichtung (C) des Luftreifens erstrecken;
eine Vielzahl von Rippen (7, 9, 11), die in einer Lateralrichtung (W) des Luftreifens durch die Vielzahl von Hauptkerben und Laufflächenränder (E) getrennt sind und sich entlang der Umfangsrichtung (C) erstrecken;
eine Vielzahl von Stollenkerben (13, 15), die auf mindestens einer der Rippen (7, 9) in Umfangsintervallen vorgesehen sind und sich entlang der Lateralrichtung (W) erstrecken;
eine Vielzahl von Blöcken (19), die durch Unterteilen der mindestens einen der Rippen (7, 9) in der Umfangsrichtung (C) durch die Vielzahl von Hauptkerben und die Vielzahl von Stollenkerben ausgebildet werden;
mindestens drei Laterallamellen (25), die sich in jedem der Blöcke entlang der Lateralrichtung (W) erstrecken und jeden der Blöcke in der Umfangsrichtung (C) unterteilen; und
einen Ausdehnungsabschnitt (27), der an einem Grund jeder der Laterallamellen (25) ausgebildet ist,
**dadurch gekennzeichnet, dass**:
die mindestens drei Laterallamellen (25) in jedem der Blöcke (19) ein Paar von ersten Laterallamellen (25A), die den beiden Umfangsrändern jedes der Blöcke (19) jeweils am nächsten liegen, und mindestens eine zweite Laterallamelle (25B), die zwischen dem Paar von ersten Laterallamellen (25A) angeordnet ist, aufweisen, und
ein Querschnittskrümmungsradius des Ausdehnungsabschnitts jeder der ersten Laterallamellen jeweils größer als ein Querschnittskrümmungsradius des Ausdehnungsabschnitts der zweiten Laterallamelle ist.

2. Luftreifen nach Anspruch 1, worin
ein Verhältnis des Krümmungsradius des Ausdehnungsabschnitts (27) jeder der ersten Laterallamellen (25A) zum Krümmungsradius des Ausdehnungsabschnitts (27) der zweiten Laterallamelle (25B) auf 0,7 bis 0,9 gesetzt wird.

3. Luftreifen nach Anspruch 1 oder 2, worin
kurze Lamellen (29), die sich entlang der Lateralrichtung (W) erstrecken, jeweils aufbeiden Lateralseitenrändem jedes der Blöcke (19) ausgebildet sind.

4. Luftreifen, umfassend:
eine Vielzahl von Hauptkerben (5), die sich auf einer Lauffläche (3) entlang einer Umfangsrichtung (C) des Luftreifens erstrecken;
eine Vielzahl von Rippen (7, 9, 11), die in einer Lateralrichtung (W) des Luftreifens durch die Vielzahl von Hauptkerben und Laufflächenränder (E) getrennt sind und sich entlang der Umfangsrichtung (C) erstrecken;
eine Vielzahl von ersten Stollenkerben (13), die auf einer Seite mindestens einer der Rippen (7, 9) in Umfangsintervallen vorgesehen sind und sich entlang der Lateralrichtung (W) erstrecken;
eine Vielzahl von zweiten Stollenkerben (15), die auf einer anderen Seite der mindestens einen der Rippen (7, 9) in Umfangsintervallen vorgesehen sind und sich entlang der Lateralrichtung (W) erstrecken;
eine Vielzahl von Verbindungslamellen (17), von denen jede ein jeweiliges Paar aus einer ersten Stollenkerbe (13) und einer zweiten Stollenkerbe (15), die an die ersten Stollenkerben (13) angrenzt, verbindet und sich entlang der Umfangsrichtung (C) erstreckt;
eine Vielzahl von Blöcken (19), die durch Unterteilen der mindestens einen der Rippen (7, 9) in der Umfangsrichtung (C) durch die Vielzahl von Hauptkerben (5), die Vielzahl von ersten Stollenkerben (13) und die Vielzahl von zweiten Stollenkerben (15) ausgebildet werden;
eine Vielzahl von Umfangslamellen (23), von denen jede in einer lateralen Mitte jedes der Blöcke (19) ausgebildet ist, sich entlang der Umfangsrichtung (C) erstreckt und jeden der Blöcke (19) in der Lateralrichtung (W) in ein Paar von Teilblöcken (21) unterteilt;
mindestens drei Laterallamellen (25), die sich in jedem der Teilblöcke (21) entlang der Lateralrichtung (W) erstrecken und jeden der Teilblöcke in der Umfangsrichtung (C) unterteilen; und
einen Ausdehnungsabschnitt (27), der an einem Grund jeder der Laterallamellen (25) ausgebildet ist,
**dadurch gekennzeichnet, dass**:
ein Ende jeder der ersten Stollenkerben (13) zu jeder der Hauptkerben (5) hin offen ist und ein anderes Ende jeder der ersten Stollenkerben (13) fast in einer lateralen Mitte der mindestens einen der Rippen (7, 9) endet,
ein Ende jeder der zweiten Stollenkerben (15) zu jeder der Hauptkerben (5) hin offen ist und ein anderes Ende jeder der zweiten Stollenkerben (15) fast in einer lateralen Mitte der mindestens einen der Rippen (7, 9) endet,
die mindestens drei Laterallamellen (25) in jedem der Teilblöcke (21) ein Paar von ersten Laterallamellen (25A), die den beiden Umfangsrändern jedes der Teilblöcke (21) jeweils am nächsten liegen, und mindestens eine zweite Laterallamelle (25B), die zwischen dem Paar von ersten Laterallamellen (25A) angeordnet ist, aufweisen, und
ein Querschnittskrümmungsradius des Ausdehnungsabschnitts jeder der ersten Laterallamellen jeweils größer als ein Querschnittskrümmungsradius des Ausdehnungsabschnitts der zweiten Laterallamelle ist.

5. Luftreifen nach Anspruch 4, worin
die zwei zweiten Laterallamellen (25B) in jedem der Teilblöcke (21) vorgesehen sind,
die Ausdehnungsabschnitte (27) des Paars von ersten Laterallamellen (25A) sich jeweils zu den beiden Umfangsrändern jedes der Teilblöcke (21) hin ausdehnen, und
die Ausdehnungsabschnitte (27) der beiden zweiten Laterallamellen (25B) sich jeweils aufeinander zu ausdehnen.

6. Luftreifen nach Anspruch 4 oder 5, worin
ein Verhältnis des Krümmungsradius des Ausdehnungsabschnitts (27) jeder der ersten Laterallamellen (25A) zum Krümmungsradius des Ausdehnungsabschnitts (27) der zweiten Laterallamelle (25B) auf 0,7 bis 0,9 gesetzt wird.

7. Luftreifen nach einem der Ansprüche 4 bis 6, worin
kurze Lamellen (29), die sich entlang der Lateralrichtung (W) erstrecken, jeweils auf beiden Lateralseitenräudern jedes der Blöcke (19) ausgebildet sind.

## Revendications

1. Pneu comprenant:
une pluralité de rainures principales (5) s'étendant sur une bande de roulement (3) le long d'une direction circonférentielle (C) du pneu;
une pluralité de nervures (7, 9, 11) séparées dans une direction latérale (W) du pneu par la pluralité de rainures principales et des bords de bande de roulement (E) et s'étendant le long de la direction circonférentielle (C);
une pluralité de rainures de dégagement (13, 15) prévues sur au moins l'une des nervures (7, 9) à intervalles circonférentiels et s'étendant le long de la direction latérale (W);
une pluralité de blocs (19) formés en divisant au moins l'une des nervures (7, 9) dans la direction circonférentielle (C) par la pluralité de rainures principales et la pluralité de rainures de dégagement;
au moins trois incisions latérales (25) s'étendant le long de la direction latérale (W) dans chacun des blocs et divisant chacun des blocs dans la direction circonférentielle (C); et
une partie de gonflage (27) formée sur un fond de chacune des incisions latérales (25),
**caractérisé en ce que**:
les au moins trois incisions latérales (25) dans chacun des blocs (19) comprennent une paire de premières incisions latérales (25A) les plus proches des deux bords circonférentiels de chacun des blocs (19), respectivement, et au moins une seconde incision latérale (25B) positionnée entre la paire de premières incisions latérales (25A), et
un rayon de courbure transversal de la partie de gonflage de chacune des premières incisions latérales est plus grand qu'un rayon de courbure transversal de la partie de gonflage de la seconde incision latérale, respectivement.

2. Pneu selon la revendication 1, dans lequel:
un rapport du rayon de courbure de la partie de gonflage (27) de chacune des premières incisions latérales (25A) sur le rayon de courbure de la partie de gonflage (27) de la seconde incision latérale (25B) est de 0,7 à 0,9.

3. Pneu selon la revendication 1 ou 2, dans lequel des incisions courtes (29) s'étendant le long de la direction latérale (W) sont formées sur les deux bords latéraux de chacun des blocs (19), respectivement.

4. Pneu comprenant:
une pluralité de rainures principales (5) s'étendant sur une bande de roulement (3) le long d'une direction circonférentielle (C) du pneu;
une pluralité de nervures (7, 9, 11) séparées dans une direction latérale (W) du pneu par la pluralité de rainures principales et des bords de bande de roulement (E) et s'étendant le long de la direction circonférentielle (C);
une pluralité de premières rainures de dégagement (13) prévues d'un côté d'au moins l'une des nervures (7, 9) à intervalles circonférentiels et s'étendant le long de la direction latérale (W);
une pluralité de secondes rainures de dégagement (15) prévues d'un autre côté d'au moins l'une des nervures (7, 9) à intervalles circonférentiels et s'étendant le long de la direction latérale (W);
une pluralité d'incisions de raccordement (17), dont chacune raccorde une paire respective composée d'une première rainure de dégagement (13) et d'une seconde rainure de dégagement (15) adjacente aux premières rainures de dégagement (13) et s'étend le long de la direction circonférentielle (C);
une pluralité de blocs (19) formés en divisant au moins l'une des nervures (7, 9) dans la direction circonférentielle (C) par la pluralité de rainures principales (5), la pluralité de premières rainures de dégagement (13) et la pluralité de secondes rainures de dégagement (15);
une pluralité d'incisions circonférentielles (23), dont chacune est formée au niveau d'un centre latéral de chacun des blocs (19), s'étend le long de la direction circonférentielle (C) et divise chacun des blocs (19) en une paire de sous-blocs (21) dans la direction latérale (W);
au moins trois incisions latérales (25) s'étendant le long de la direction latérale (W) dans chacun des sous-blocs (21) et divisant chacun des sous-blocs dans la direction circonférentielle (C); et
une partie de gonflage (27) formée sur un rond de chacune des incisions latérales (25),
**caractérisé en ce que**:
une extrémité de chacune des premières rainures de dégagement (13) est ouverte vers chacune des rainures principales (5) et une autre extrémité de chacune des premières rainures de dégagement (13) se termine presque au niveau d'un centre latéral d'au moins l'une des nervures (7, 9),
une extrémité de chacune des secondes rainures de dégagement (15) est ouverte vers chacune des rainures principales (5) et une autre extrémité de chacune des secondes rainures de dégagement (15) se termine presque au niveau d'un centre latéral d'au moins l'une des nervures (7, 9),
les au moins trois incisions latérales (25) dans chacun des sous-blocs (21) comprennent une paire de premières incisions latérales (25A) les plus proches des deux bords circonférentiels de chacun des sous-blocs (21), respectivement, et au moins une seconde incision latérale (25B) positionnée entre la paire de premières incisions latérales (25A), et
un rayon de courbure transversal de la partie de gonflage de chacune des premières incisions latérales est plus grand qu'un rayon de courbure transversal de la partie de gonflage de la seconde incision latérale, respectivement.

5. Pneu selon la revendication 4, dans lequel:
les deux secondes incisions latérales (25B) sont prévues dans chacun des sous-blocs (21),
les parties de gonflage (27) de la paire de premières incisions latérales (25A) se gonflent vers les deux bords circonférentiels de chacun des sous-blocs (21), respectivement, et
les parties de gonflage (27) des deux secondes incisions latérales (25B) se gonflent l'une vers l'autre, respectivement.

6. Pneu selon la revendication 4 ou 5, dans lequel:
un rapport de rayon de courbure de la partie de gonflage (27) de chacune des premières incisions latérales (25A) sur le rayon de courbure de la partie de gonflage (27) de la seconde incision latérale (25B) est de 0,7 à 0,9.

7. Pneu selon l'une quelconque des revendications 4 à 6, dans lequel:
des incisions courtes (29) s'étendant le long de la direction latérale (W) sont formées sur les deux bords latéraux de chacun des blocs (19), respectivement.
